# EUROPEAN PATENT SPECIFICATION

(11) **EP 1 705 927 B1**
(45) Date of publication and mention of the grant of the patent: **21.07.2010**
(21) Application number: 05300217.6
(22) Date of filing: 23.03.2005
(51) Int. Cl.: H04N 13/00, G02B 27/22

(54) **Autostereoscopic display using time-sequential method**
Autostereoskopische Anzeigevorrichtung mit zeitsequentiellem Verfahren
Dispositif d'affichage autostéréoscopique utilisant la méthode à séquence temporelle

(43) Date of publication of application: 27.09.2006
(73) Proprietor: Thomson Licensing, 92443 Issy-les-Moulineaux Cedex (FR)
(72) Inventor: Chikazawa, Yoshiharu, Yokohama, 221-0073 (JP)
(74) Representative: Frese-Göddeke, Beate

(56) References cited:
- WO-A-2005/027534
- US-A- 5 410 345
- US-A- 5 771 066
- MORISHIMA H ET AL: "REAR CROSS LENTICULAR 3D DISPLAY WITHOUT EYEGLASSES" PROCEEDINGS OF THE SPIE, SPIE, BELLINGHAM, VA, US, vol. 3295, 26 January 1998 (1998-01-26), pages 193-202, XP008022114 ISSN: 0277-786X
- TOYOOKA K. ET AL: '13.2: The 3D Display Using Field-Sequential LCD with Light Direction Controlling Back-light' 2001 SID INTERNATIONAL SYMPOSIUM vol. XXXII, 2001, SAN JOSE CONVENTION CENTER, CALIFORNIA, page 174, XP007007639

## Description

### FIELD OF THE INVENTION

The present invention relates to a stereoscopic display, particularly to a stereoscopic display that uses a striped backlight source and a control unit to produce stereoscopic images.

### BACKGROUND OF THE INVENTION

Conventional stereoscopic display devices mostly use a scan backlight (field sequential) method to produce stereoscopic images, as described in EP 1001298A1 and EP1001300A2.

A conventional stereoscopic display device, as disclosed in the EP patents above, generally includes a transmissive image reproducing element, two light sources, an optical means to direct the light emitted by the light sources, and a control means. The light sources used as backlights in conventional stereoscopic display devices are generally white LEDs. The optical means directs the light from one light source toward the right eye and the light from the other light source toward the left eye. The optical means in conventional stereoscopic display devices is generally a mirror plate that has two sides. The light sources and the transmissive image reproducing element are mounted on the same side of the mirror plate. The control means alternately displays a right image and a left image on the image reproducing element. The light source emitting light for the right eye is activated only when the right image is displayed, and the light source emitting light for the left eye, only when the left image is displayed. Although the light sources and the transmissive image reproducing element are mounted on the same side of the mirror plate to minimize the size of the stereoscopic device, making a thin and compact display for mobile equipment such as mobile phones is difficult.

Since the mirror plate must be a Fresnel mirror or have another special shaped surface, the design for that kind of display is often complicated. Therefore, an improved stereoscopic display device is desired to solve this problem.

US 5,410,345 discloses a video display. The display comprises a transparent display, optical means composed of multiple lenticular lenses, a backlight source and a control unit. To achieve a full resolution for autostereoscopic pictures the backlight source incorporates a stroboscopic illumination system or continuous light with shutter means. The backlight source is not composed by strips which are aligned with the lenses.

K. Toyooka, T. Miyashita and T. Uchida in "The 3D Display Using Field-Sequential LCD with Light Direction Controlling Back Light", 2001 XP007007639 describe a 3D display method, wherein the display includes LCD, lenticular lenses and stripe patterned back light. In the display, the number of stripe pattern of the back light allocated to one pitch of the lenticular lenses corresponds to the number of the directional domains. The typical design of the display is two stripes per one lens pitch. However when the focal plane of the lens is set to the stripe patterns, the light for the right and left eyes passes in two different ranges, and the two ranges superpose in a region which causes cross-talk of the binocular images. In order to solve this problem, a distance between the principal point of the lens and the stripe pattern has to be adjusted to a required distance.

US 5,771,066 describes a 3D display device including a lens, a spatial light modulator and a two dimensional display device having a screen. The lens is arranged between the display device and the light modulator for transferring the spots of light on the screen to the left or the right eye of a viewer. The device also includes a camera for tracking the eye motion. By that the device is more expensive and complicated to be controlled.

### SUMMARY OF THE INVENTION

A stereoscopic display device in accordance with the present invention is provided to improve the design of conventional stereoscopic display devices.

According to the invention, the stereoscopic display device comprises a transparent type display for alternately displaying left and right images, a backlight source for alternately emitting left and right group backlight projecting on a backside of the display, an optical means for directing the left and right group backlight towards a left image-viewing area and a right image-viewing area, and a control unit for controlling displaying of the display and light emitting of the backlight source. Particularly, the backlight source includes multiple left backlight strips and right backlight strips arranged alternately in parallel, each two adjacent left and right backlight strips being combined as one backlight unit. The control unit is used to activate the backlight source to emit the left group backlight from the left backlight strips of the backlight source in synchronization with displaying of the left image, and emit the right group backlight from the right backlight strips of the backlight source in synchronization with the displaying of the right image.

By utilizing the strip-shaped backlight source and the time-sharing controlling mode to alternately displaying left and right images on the transparent type display in synchronization with the left and right group backlight emitting, and also due to the special design of the optical means, a thin and compact type stereoscopic display device compared with the conventional stereoscopic displays is achieved according the present invention. When the display continuously input normal 2D (monoscopic) image signal, the display is also capable of working as a normal 2D display. Moreover, the inventive stereoscopic display device has only a very small ghost double image area that prevents a stereoscopic image from being established.

The optical means is a lenticular lens layer being composed of multiple lenticular lenses, each one of which is aligning with a corresponding one backlight unit of the backlight source, whereby the light emitted from all of the left backlight strips of the backlight source is directed to the left image-viewing area, and the light emitted from all of the right backlight strips of the backlight source is directed to the right image-viewing area. The lenticular lens layer of the optical means comprises multiple lens separators respectively provided between the adjacent lenticular lenses, by that avoiding crosstalk.

According to the invention, multiple black strips are designed to be provided between the adjacent strips of the backlight source. In another practicable embodiment of the invention, a backlight mask layer having multiple black strips printed thereon is provided on the backlight source.

Advantageously, the projected stereoscopic image area of the inventive stereoscopic display device can be easily designed depending on the design of the optical means and the backlight source, including the design of black strips (spacers) and the design of the focal length, lens principal point and lens size of the lenses etc.

In an alternatively embodiment of the invention, a pulse width modulator (PWM) is used in the control unit in order to modulate the ON-time duty of the strip-shaped backlight source. When the On-time period of the backlight is shorter than the Off-time period of the backlight, an observer positioned in front of the display can see a bright image, while other observers sitting to the sides can only see a dark image, so the stereoscopic display device of the invention advantageously works as a private display. Advantageously, the brightness of the backlight is also possible to be adjusted by the pulse width modulation method.

### BRIEF DESCRIPTION OF DRAWINGS

Fig. 1 is an exploded perspective view of a stereoscopic display device in accordance with the present invention;
Fig. 2 is a schematic top view of the stereoscopic display device in Fig. 1;
Fig. 3 a functional block diagram of the stereoscopic display device in accordance with the present invention;
Fig. 4A is a ray diagram when the right backlight is activated;
Fig. 4B is a ray diagram when the left backlight is activated;
Fig. 5 a timing diagram showing the working principle of the stereoscopic display device in accordance with the present invention;
Fig. 6 is a schematic view of the present invention showing the left and right image-viewing areas and the ghost double image area of the stereoscopic display device;
Fig. 7 is a perspective view of one embodiment of the backlight source of the stereoscopic display device in accordance with the present invention;
Fig. 8 is a schematic view of another practicable embodiment of the backlight source of the stereoscopic display device in accordance with the present invention;
Fig. 9 is a schematic view of an embodiment of black strips designed in the backlight source of the stereoscopic display device in accordance with the present invention;
Fig. 10 is a schematic view of another embodiment of the black strips being printed on a mask layer applied on the backlight source of the stereoscopic display device in accordance with the present invention;
Fig. 11 is a schematic view of an embodiment of lens separators of the optical means of the stereoscopic display device in accordance with the present invention;
Fig. 12 is a schematic view of another embodiment of the lens separators of the optical means of the stereoscopic display device in accordance with the present invention;
Fig. 13 is a schematic view of an embodiment of an LCD mask layer applied on a back side of a liquid crystal display of the stereoscopic display device in accordance with the present invention;
Fig. 14A is a timing diagram showing the stereoscopic display device of the invention simultaneously turns the left group backlight and the right group backlight on and off to present a normal 2D image;
Fig. 14B is a timing diagram showing the stereoscopic display device of the invention continuously turns the left and right group backlight on to present a normal 2D image; and
Fig. 15A and 15B are timing diagrams showing the stereoscopic display of the invention being modulated in PWM control mode.

### DETAIL DESCRIPTION OF PREFERRED EMBODIMENTS

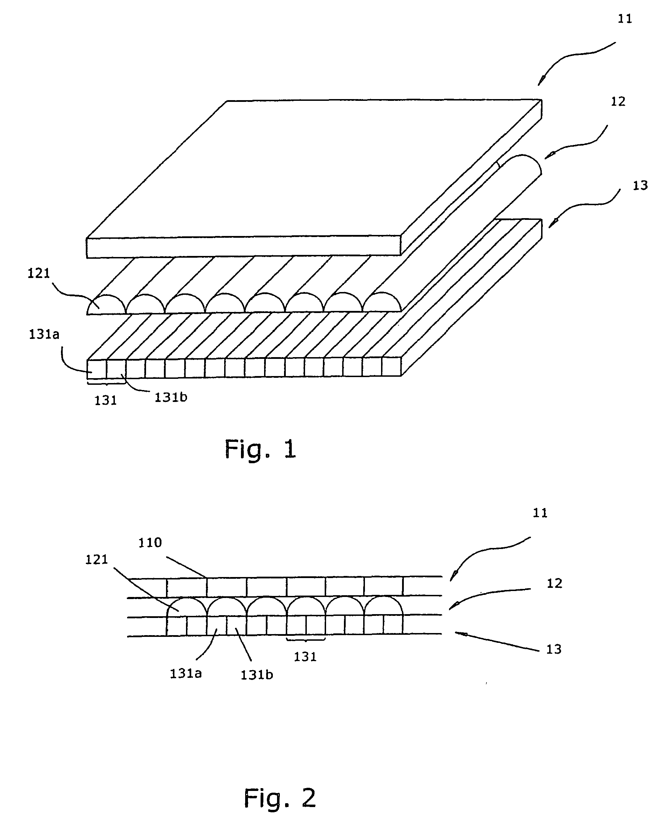

With reference to Figs. 1 to 3, a stereoscopic display device in accordance with the present invention generally comprises a transparent type display 11, for example, a liquid crystal display (LCD), an optical means 12, a backlight source 13 and a control unit 14. The display 11 is used to alternately display right and left images. The backlight source 13 is used to emit backlight from a backside of the display 11. The optical means 12, which is provided between the display 11 and the backlight source 13, is used to directing the light emitted from the backlight source 13 to project on the display 11 towards a person's right eye and left eye. Particularly, the control unit 14 is used to controlling displaying of left and right images on the display 11 and activating the backlight source 13.

As shown in Fig.2, the display 11 is composed of multiple pixels/subpixels being divided by multiple separators 110. The optical means 12 is formed in a lenticular lens layer comprising multiple lenticular lenses 121 which is used to change the radiating direction of the backlight. Each one of the lenticular lenses 121 corresponds to one pixel/subpixel of the display 11.

The backlight source 13 includes multiple left backlight strips 131a and right backlight strips 131b arranged alternately in parallel. Each two adjacent left and right backlight strips 131a, 131b are combined as one backlight unit 131 aligning with a corresponding one of the lenticular lenses 121. In one preferred embodiment of the present invention, the left backlight strips 131a and right backlight strips 131b are striplights being selectively made of organic or inorganic electroluminescent (EL) material, LED array, or CCFL (cold cathode fluorescent lamp) array, HCFL (hot cathode fluorescent lamp) array etc. In another practicable embodiment, the multiple left backlight strips 131a and right backlight strips 131b are made of strip-shaped light guides. The left backlight strips 131a and the right backlight strips 131b are used to respectively and independently guide the left backlight emitting from a left light and the right backlight emitting from a right light. In yet another embodiment, the backlight source 13 comprises a shutter layer provided on a non-divided lighting layer. The shutter layer is composed of multiple left shutter strips and right shutter strips. The features of these embodiments of the backlight source 13 will be discussed in detail later by giving examples in accompanying with drawings.

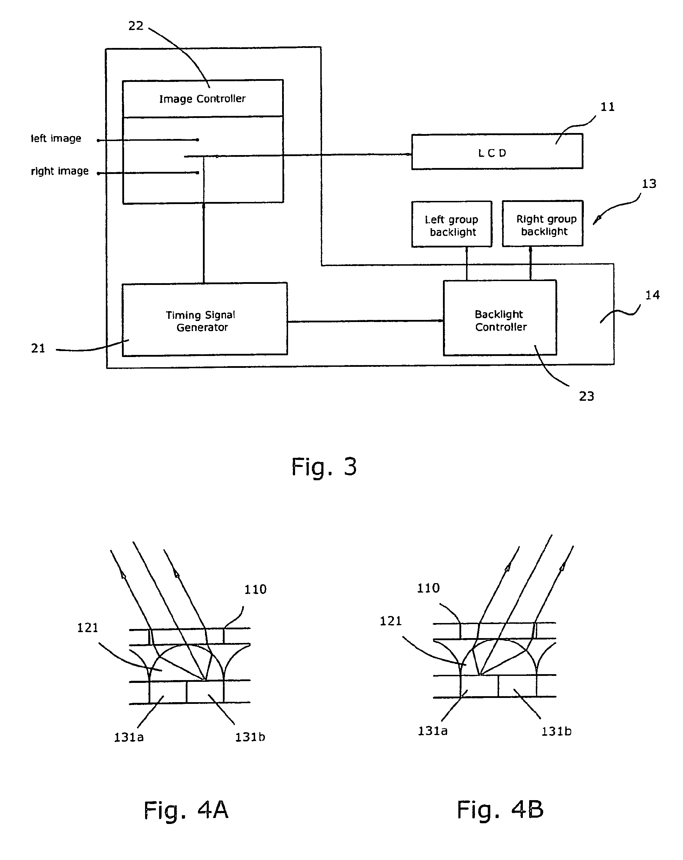

The control unit 14 as illustrated in Fig.3 comprises a timing signal generator 21 for producing synchronization signals, an image controller 22 for controlling of image displaying on the display 11, and a backlight controller 23 for controlling of the light emitting of the backlight source 13.

According to the present invention, the image controller 22 is used to control the displaying of left and right images alternately in order to form a stereoscopic image on the display 11 based on the synchronization signals received from the timing signal generator 21. The backlight controller 23 alternately turns on and off the appropriate left or right backlight strips 131a, 131b in synchronization with the displaying of the left and right images based on the synchronization signals received from the timing signal generator 21. Consequently, the light emitted from the right backlight strips 131b is received by the corresponding lenticular lenses 121 and refracted to a left radiating direction when the right backlight strips 131b are activated by the control unit 14, as shown in Fig. 4A; while the light emitted from the left backlight strips 131a is received by the corresponding lenticular lenses 121 and refracted to a right radiating direction when the right backlight strips 131a are activated by the control unit 14, as shown in Fig. 4B.

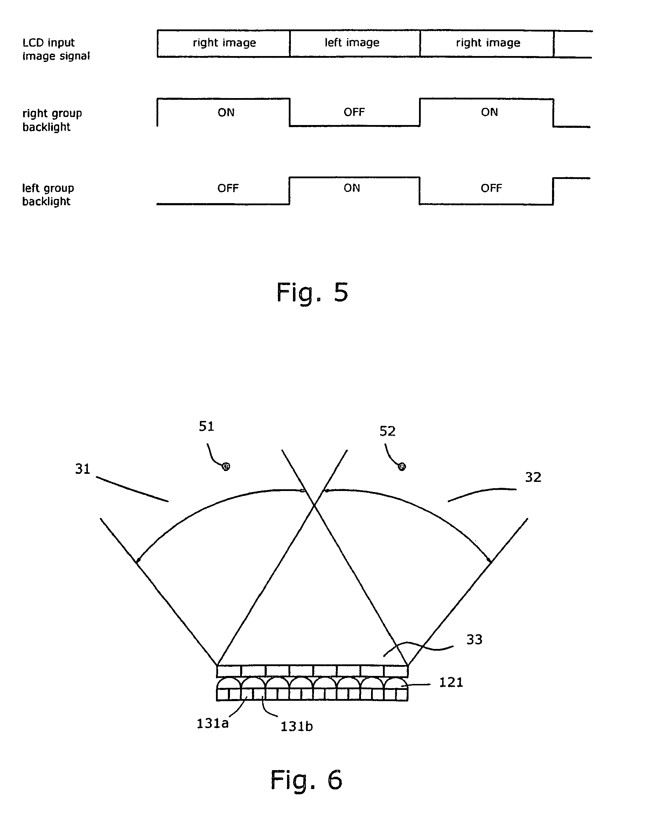

In order to explain the working principle of the stereoscopic display of the present invention, detail description will be made with reference to Figs. 3 and 5. When the timing signal generator 21 transmits a first synchronization signal to the image controller 22 and the backlight controller 23, in response to the first synchronization signal the image controller 22 inputs the right image to the display 11, simultaneously, the backlight controller 23 received with the first signal activates the right backlight strips 131b to turn on the right group backlight projecting towards the right image displaying on the display 11, while the left backlight strips 131a are off during this period. Thus all the lenticular lenses 121 receive the right group backlight emitted from the right backlight strips 131b and refract the right group backlight to a right image-viewing area 31 for a viewer's right eye 51, as illustrated in Fig. 6.

Now still with reference back to Figs.3 and 5, when the timing signal generator 21 transmits a second synchronization signal to the image controller 22 and the backlight controller 23, in response to the second synchronization signal the image controller 22 inputs the left image to the display 11, simultaneously, the backlight controller 23 received with the second signal activates the left backlight strips 131a to turn on the left group backlight projecting on the left image displaying on the display 11, while the right backlight strips 131b are off during this period. Thus all the lenticular lenses 121 receive the left group backlight emitted from the left backlight strips 131a and refract the left group backlight to a left image-viewing area 32 for the viewer's left eye 52, as illustrated in Fig.6.

It can be seen clearly in Fig.6, the right image-viewing area 31 and the left image-viewing area 32 are overlapped in a triangular field 33 which is called as a ghost double area. In such ghost double area people can not see any legible image but a blurred image. If the viewer's eyes 51, 52 are respectively placed in the right and left image-viewing areas 31, 32, a stereoscopic image can be seen by the viewer. Since the duration of each one of synchronization signal is less than a predefined time parameter, for instance, less than 1/16 second, which allows the viewer not to sense and distinguish individual left and right images but sense a stereoscopic image from the asynchronous left and right images. If the observer set both his/her left and right eyes in the right or left image-viewing areas 31, 32, the observer can only see normal 2D right or left image.

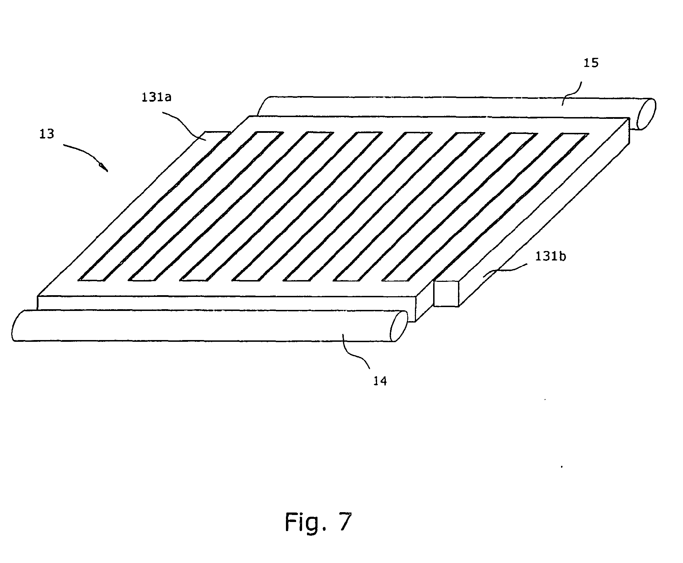

As illustrated in Fig. 7, in a practicable embodiment, the left and right backlight strips 131a, 131b of the backlight source 13 are formed by light guide made of any possible optical material. The left backlight strips 131a of the light guide are preferably integrated into a comb-like shaped one-piece member having a connecting part formed at first ends thereof. The right backlight strips 131b of the light guide are integrated into a comb-like shaped one-piece member having a connecting part formed at second ends thereof. In this case, left and right lights 14, 15 are respectively provided adjacent the connecting parts of the left backlight strips 131a and the right backlight strips 131b, therefore, the left group backlight is emitted from the left light 14 through the left backlight strips 131a of the light guide towards the display, and the right group backlight is emitted from the right light 15 through the right backlight strips 131b of the light guide towards the display. The left and right lights 14, 15 can be CCFL, HCFL (hot cathode fluorescent lamp), fluorescent lamp, LED, or organic/inorganic EL.

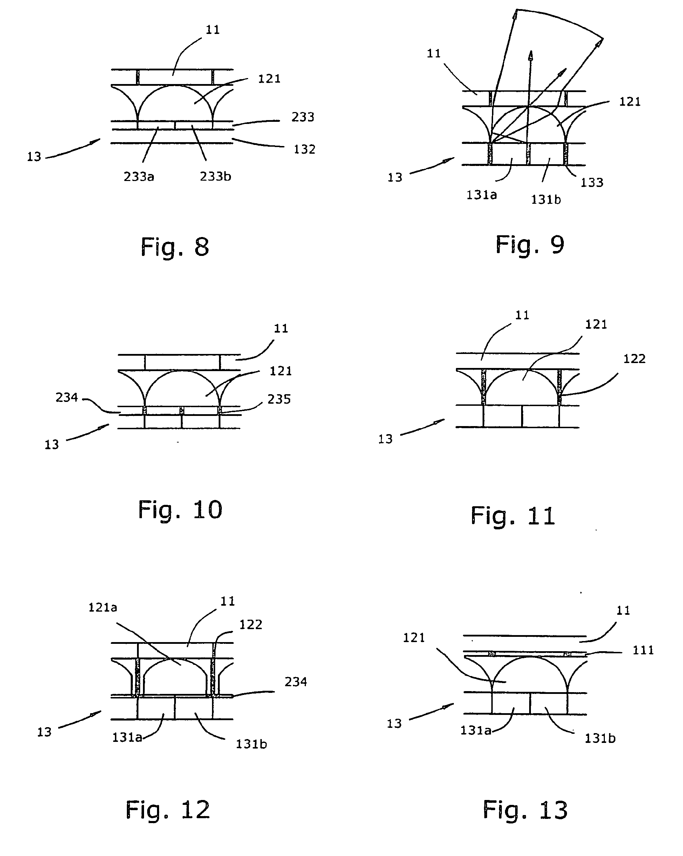

Fig. 8 shows another practicable embodiment of the backlight source 13, which comprises a shutter layer 233 provided on a top surface of a non-divided lighting layer 132. The shutter layer 233 comprises multiple left shutter strips 233a and right shutter strips 233b, which are arranged alternately in parallel to form and act as the left backlight strips 131a and right backlight strips 131b (as seen in Figs. 1 and 2), whereby the left and right shutter strips 233a, 233b open and close alternately to allow the backlight to emit therethrough. The non-divided lighting layer 132 can be any type of light such as CCFL array, HCFL array, plasma display lamp array, LED, organic/inorganic EL (electroluminescent), fluorescent lamp, FED (field emission display) etc. It is possible to use Liquid Crystal (LC), electrophoretic type, mechanical type, electro-optical crystal type, electro-chromic type shutter as the left and right shutter strips 233a, 233b.

The projected stereoscopic image area can be easily designed depending on the design of the optical means 12 and the backlight source 13. One important point is the design of the black strips (spacers) of the backlight source 13. Another important point is the design of the lens for the lenticular lens layer, for example, the focal length, lens principal point and lens size of the lenses.

As illustrated in Fig. 9, in one embodiment of present the invention, multiple black strips 133 are designed to be provided between the adjacent left and right backlight strips 131a, 131b in order to adjust the projected stereoscopic image area of the stereoscopic display device.

As shown in Fig.10, another practicable embodiment of the present invention is to provide a backlight mask layer 234 having multiple black strips 235 printed thereon instead of the black strips 133 shown in Fig.9. The multiple black strips 235 printed on the backlight mask layer 234 are respectively aligned with edges of the left and right backlight strips 131a, 131b.

With reference to Fig. 11, multiple lens separators 122 may be provided between the adjacent lenticular lenses 121 to avoid crosstalk rays from adjacent lenses.

Fig. 12 shows another embodiment of optical means 12 which is composed of multiple separated lenticular lenses 121a with a width smaller than the pitch of a pixel(subpixel) of the display 11. In this case, the backlight mask layer 234 provided on the top side of the backlight source (13) is required to be combined together with the multiple lens separators 122, or alternatively, a display (LCD) mask layer (not shown) provided on a backside of the display (11) is applicable instead of the backlight mask layer 234.

As shown in Fig. 13, an LCD mask layer 111 is provided on the back side of the display 11. Multiple separate lines (not numbered) are printed on the LCD mask layer 111 to act as pixel separators.

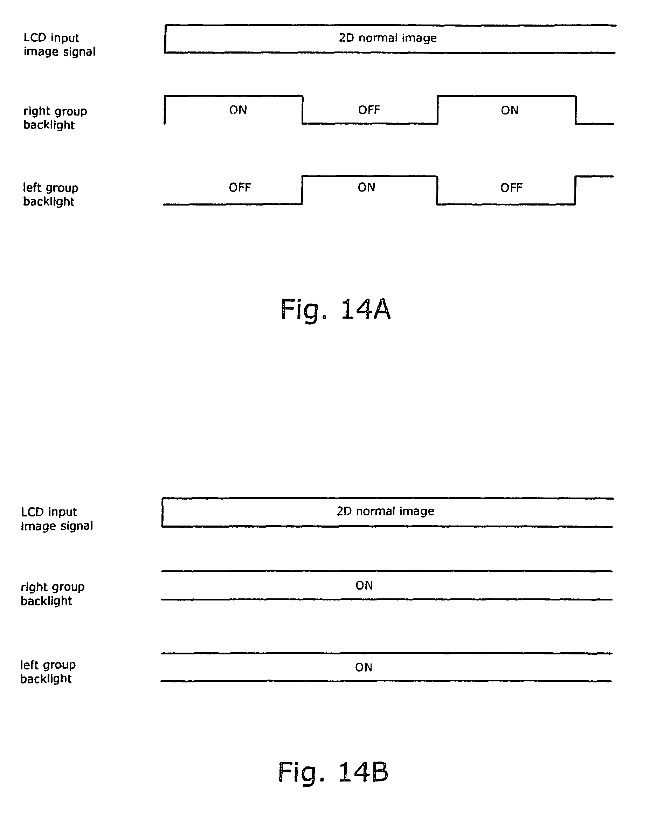

The stereoscopic display device in accordance with this invention is also capable of showing normal 2D images. When the LCD input signal displays normal 2D images continuously, the display works as a normal 2D display. With reference to Fig. 14A, a blinking backlight may be used, i.e. the right and left group backlight turns on and off simultaneously, while the image displaying is continuously. With reference to Fig. 14B, a continuously ON backlight may also be used to display the 2D image. The brightness of the stereoscopic display device is also adjustable.

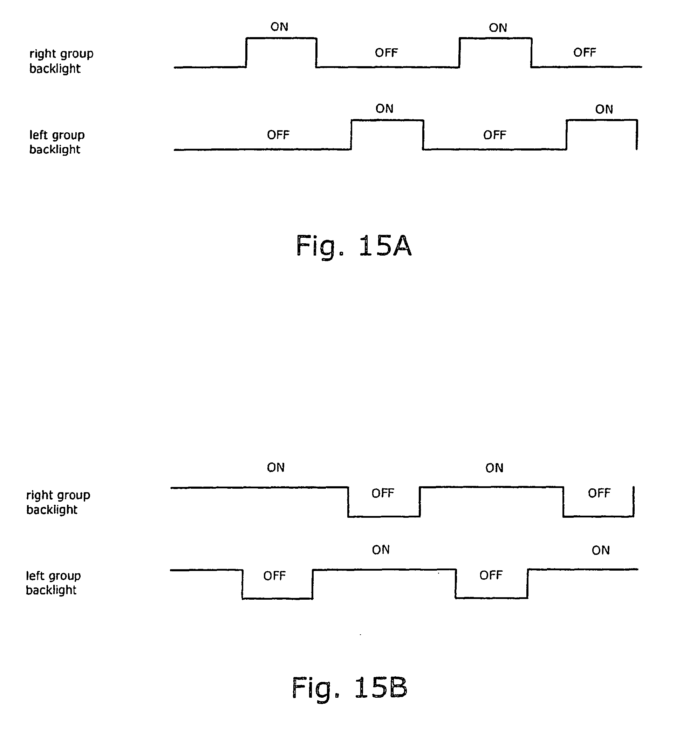

With reference to Fig. 15A and 15B, the display luminance can also be controlled by modulating the On-time duty of the backlight in a pulse width modulation (PWM) method. In order to use this PWM method, a pulse width modulator is provided in the control unit 14 according to the present invention. As shown in Fig. 15A, when the ON-time period of the backlight is shorter than the OFF-time period of the backlight, an observer in front of the display can see a bright image, while others at oblique positions can only see a darker image. In this mode, it will be better and suitable if the display is used as a private display. As shown in Fig. 15B, when the ON-time period is longer than the OFF-time period, the display luminance is larger, therefore the brightness of the backlight source is also controllable by means of pulse width modulation. Certainly, the brightness control by means of PWM method as illustrated in Fig. 15 is also applicable in the 2D display modes.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A stereoscopic display device comprising
a transparent type display (11) for alternately displaying left and right images,
an optical means (12) for directing the left and right group backlight towards a left image-viewing area (32) and a right image-viewing area (31),
a backlight source (13) for alternately emitting left and right group backlight projecting on a backside of the display (11), and
a control unit (14) for controlling displaying of the display (11) and backlight emitting of the backlight source (13),
the optical means (12) being a lenticular lens layer provided between the transparent type display (11) and the backlight source (13), wherein said backlight source (13) includes multiple left backlight strips (131a) and right backlight strips (131b) arranged alternately in parallel, each two adjacent left and right backlight strips (131 a, 131 b) being combined as one backlight unit (131), and said lenticular lens layer is composed of multiple lenticular lenses (121), each one of which is aligning with a corresponding one backlight unit (131) of the backlight source (13), whereby the light emitted from the left backlight strips (131 a) is directed to the left image-viewing area (32), and the light emitted from the right backlight strips (131b) is directed to the right image-viewing area (31); and
the control unit (14) activating the backlight source (13) to emit the left group backlight from the left backlight strips (131 a) of the backlight source (13) in synchronization with displaying of the left image, and emit the right group backlight from the right backlight strips (131 b) of the backlight source (13) in synchronization with displaying of the right image,
**characterized in that** the lenticular lens layer of the optical means (12) comprises multiple lens separators (122) respectively provided between the adjacent lenticular lenses (121).

2. The stereoscopic display device as claimed in claim 1, **characterized in that** the lenticular lens (121) has a width smaller than a pitch between two adjacent pixels of the transparent type display (11), a backlight mask layer (234) is provided on a top side of the backlight source (13) together with the multiple lens separators (122).

3. The stereoscopic display device as claimed in claim 1, **characterized in that** the lenticular lens (121) has a width smaller than a pitch between two adjacent pixels of the transparent type display (11), a display mask layer is provided on a back side of the display (11) together with the multiple lens separators (122).

4. The stereoscopic display device as claimed in claim 1, **characterized in that** the multiple left and right backlight strips (131a, 131b) of the backlight source (13) are striplights.

5. The stereoscopic display device as claimed in claim 4, **characterized in that** the striplights of the left and right backlight strips (131 a, 131 b) of the backlight source (13) are selected from a group consisting of organic or inorganic electroluminescent (EL) material, LED array, cold cathode fluorescent lamp (CCFL) array, and hot cathode fluorescent lamp (HCFL) array.

6. The stereoscopic display device as claimed in claim 4, **characterized in that** the backlight source (13) comprises black strips (133) respectively provided between the adjacent left and right backlight strips (131 a, 131 b).

7. The stereoscopic display device as claimed in claim 4, **characterized in that** a mask layer (234) having black strips (235) designed thereon in line with edges of the left and right backlight strips (131a, 131 b) is provided on the backlight source (13).

8. The stereoscopic display device as claimed in claim 1, **characterized in that** the backlight source (13) includes a shutter layer (233) provided on a top surface of a non-divided lighting layer (132), the shutter layer 233 comprises multiple left shutter strips (233a) and right shutter strips (233b) arranged alternately in parallel, whereby the left and right shutter strips (233a, 233b) open and close alternately to allow the backlight to emit therethrough.

9. The stereoscopic display device as claimed in claim 8, **characterized in that** the non-divided light layer (132) of the backlight source (13) is selected from a group consisting of cold cathode fluorescent lamp (CCFL) array, LED array, organic/inorganic electroluminescent (EL) material, hot cathode fluorescent lamp (HCFL) array, plasma display lamp, and field emission display (FED).

10. The stereoscopic display device as claimed in claim 8, **characterized in that** the shutter layer (233) is selected from a group consisting of liquid crystal (LC) shutter, electrophoretic type shutter, mechanical type shutter, electro-optical crystal type shutter, electro-chromic type shutter.

11. The stereoscopic display device as claimed in claim 1, **characterized in that** the transparent type display (11) is a liquid crystal display.

12. The stereoscopic display device as claimed in claim 11, **characterized in that** the liquid crystal display has pixel separators (110) provided therein between the adjacent pixels.

13. The stereoscopic display device as claimed in claim 11, **characterized in that** an LCD mask layer (111) having pixel separators designed thereon is provided on a back side of the liquid crystal display.

14. The stereoscopic display device as claimed in claim 1, **characterized in that** the left and right backlight strips (131a, 131b) of the backlight source (13) is made of light guide, the left backlight strips (131a) are used to guide left group backlight emitted from a left light (14), and the right backlight strips (131b) are used to guide right group backlight emitted from a right light (15).

15. The stereoscopic display device as claimed in claim 14, **characterized in that** the left backlight strips (131 a) of the light guide are integrated into a comb-like shaped one-piece member having a connecting part formed at first ends thereof, the right backlight strips (131 b) of the light guide are integrated into a comb-like shaped one-piece member having a connecting part formed at second ends thereof, the left and right lights (14, 15) are respectively provided adjacent the connecting parts of the left and right backlight strips (131 a, 131b).

16. The stereoscopic display device as claimed in one of claims 14 and 15, **characterized in that** the left and right lights (14, 15) are selected from a group consisting of cold cathode fluorescent lamp (CCFL), hot cathode fluorescent lamp (HCFL), LED, and organic/inorganic electroluminescent (EL) material.

17. The stereoscopic display device as claimed in any one of preceding claims, **characterized in that** the control unit (14) comprises
a timing signal generator (21) for producing synchronization signals,
an image controller (22) for displaying the left image and right image on the transparent type display (11) based on the synchronization signals received from the timing signal generator (21), and
a backlight controller (23) for activating the left group backlight and the right group backlight based on the synchronization signals received from the timing signal generator (21).

18. The stereoscopic display device as claimed in claim 17, **characterized in that** the control unit (14) comprises a pulse width modulator (PWM) to adjust ON-time duty of the left and right group backlight.

## Patentansprüche

1. Stereoskopische Anzeigevorrichtung, die umfasst:
eine Anzeige (11) vom durchsichtigen Typ zum abwechselnden Anzeigen linker und rechter Bilder,
ein optisches Mittel (12) zum Lenken der Hintergrundbeleuchtung der linken und der rechten Gruppe in Richtung eines Betrachtungsbereichs (32) des linken Bilds und eines Betrachtungsbereichs (31) des rechten Bilds,
eine Hintergrundbeleuchtungsquelle (13) zum abwechselnden Aussenden einer Hintergrundbeleuchtung der linken und der rechten Gruppe, die auf eine Rückseite der Anzeige (11) projiziert wird, und
eine Steuereinheit (14) zum Steuern des Anzeigens der Anzeige (11) und der Hintergrundbeleuchtungsaussendung der Hintergrundbeleuchtungsquelle (13),
wobei das optische Mittel (12) eine Linsenraster-Linsenschicht ist, die zwischen der Anzeige (11) vom durchsichtigen Typ und der Hintergrundbeleuchtungsquelle (13) vorgesehen ist, wobei die Hintergrundbeleuchtungsquelle (13) mehrere linke Hintergrundbeleuchtungsstreifen (131a) und rechte Hintergrundbeleuchtungsstreifen (131b) enthält,
die abwechselnd parallel angeordnet sind, wobei je zwei benachbarte linke und rechte Hintergrundbeleuchtungsstreifen (131a, 131b) als eine Hintergrundbeleuchtungseinheit (131) kombiniert sind und wobei die Linsenraster-Linsenschicht aus mehreren Linsenraster-Linsen (121) besteht, von denen jede auf eine entsprechende Hintergrundbeleuchtungseinheit (131) der Hintergrundbeleuchtungsquelle (13) ausgerichtet ist, wodurch das von den linken Hintergrundbeleuchtungsstreifen (131a) ausgesendete Licht zu dem Betrachtungsbereich (32) des linken Bilds und das von den rechten Hintergrundbeleuchtungsstreifen (131b) ausgesendete Licht zu dem Betrachtungsbereich (31) des rechten Bilds gelenkt wird; und
wobei die Steuereinheit (14) die Hintergrundbeleuchtungsquelle (13) zum Aussenden der Hintergrundbeleuchtung der linken Gruppe von den linken Hintergrundbeleuchtungsstreifen (131a) der Hintergrundbeleuchtungsquelle (13) synchron zum Anzeigen des linken Bilds und zum Aussenden der Hintergrundbeleuchtung der rechten Gruppe von den rechten Hintergrundbeleuchtungsstreifen (131b) der Hintergrundbeleuchtungsquelle (13) synchron zum Anzeigen des rechten Bilds aktiviert,
**dadurch gekennzeichnet, dass** die Linsenraster-Linsenschicht des optischen Mittels (12) mehrere Linsenseparatoren (122) umfasst, die jeweils zwischen den benachbarten Linsenraster-Linsen (121) vorgesehen sind.

2. Stereoskopische Anzeigevorrichtung nach Anspruch 1, **dadurch gekennzeichnet, dass** die Linsenraster-Linse (121) eine kleinere Breite als ein Abstand zwischen zwei benachbarten Pixeln der Anzeige (11) vom durchsichtigen Typ aufweist, wobei auf einer Oberseite der Hintergrundbaleuchtungsquelle (13) zusammen mit den mehreren Linsenseparatoren (122) eine Hintergrundbeleuchtungs-Maskenschicht (234) vorgesehen ist.

3. Stereoskopische Anzeigevorrichtung nach Anspruch 1, **dadurch gekennzeichnet, dass** die Linsenraster-Linse (121) eine kleinere Breite als ein Abstand zwischen zwei benachbarten Pixeln der Anzeige (11) vom durchsichtigen Typ aufweist, wobei auf einer Rückseite der Anzeige (11) zusammen mit den mehreren Linsenseparatoren (122) eine Anzeigemaskenschicht vorgesehen ist.

4. Stereoskopische Anzeigevorrichtung nach Anspruch 1, **dadurch gekennzeichnet, dass** die mehreren linken und rechten Hintergrundbeleuchtungsstreifen (131a, 131b) der Hintergrundbeleuchtungsquelle (13) Lichtleisten sind.

5. Stereoskopische Anzeigevorrichtung nach Anspruch 4, **dadurch gekennzeichnet, dass** die Lichtleisten der linken und der rechte Hintergrundbeleuchtungsstreifen (131a, 131b) der Hintergrundbeleuchtungsquelle (13) aus einer Gruppe ausgewählt sind, die aus einem organischen oder anorganischen Elektrolumineszenzmaterial (EL-Material), aus einer LED-Anordnung, aus einer Kaltkatoden-Leuchtstofflampenanordnung (CCFL-Anordnung) und aus einer Glühkatoden-Leuchtstofflampenanordnung (HCFL-Anordnung) besteht.

6. Stereoskopische Anzeigevorrichtung nach Anspruch 4, **dadurch gekennzeichnet, dass** die Hintergrundbeleuchtungsquelle (13) schwarze Streifen (133) umfasst, die jeweils zwischen den benachbarten linken und rechten Hintergrundbeleuchtungsstreifen (131a, 131b) vorgesehen sind.

7. Stereoskopische Anzeigevorrichtung nach Anspruch 4, **dadurch gekennzeichnet, dass** auf der Hintergrundbeleuchtungsquelle (13) eine Maskenschicht (234) mit schwarzen Streifen (235), die ausgerichtet auf die Ränder der linken und der rechten Hintergrundbeleuchtungsstreifen (131a, 131b) darauf konstruiert ist, vorgesehen ist.

8. Stereoskopische Anzeigevorrichtung nach Anspruch 1, **dadurch gekennzeichnet, dass** die Hintergrundbeleuchtungsquelle (13) eine Verschlussschicht (233) enthält, die auf einer oberen Oberfläche einer nicht geteilten Beleuchtungsschicht (132) vorgesehen ist, wobei die Verschlussschicht (233) mehrere linke Verschlussstreifen (233a) und rechte Verschlussstreifen (233b) umfasst, die abwechselnd parallel angeordnet sind, wobei die linken und die rechten Verschlussstreifen (233a, 233b) abwechselnd öffnen und schließen, um zu ermöglichen, dass die Hintergrundbeleuchtung durch sie aussendet.

9. Stereoskopische Anzeigevorrichtung nach Anspruch 8, **dadurch gekennzeichnet, dass** die nicht geteilte Beleuchtungsschicht (132) der Hintergrundbeleuchtungsquelle (13) aus einer Gruppe ausgewählt ist, die aus einer Kaltkatoden-Leuchtstofflampenanordnung (CCFL-Anordnung), aus einer LED-Anordnung, aus einem organischen/anorganischen Elektrolumineszenzmaterial (EL-Material), aus einer Glühkatoden-Leuchtstofflampenanordnung (HCFL-Anordnung), aus einer Plasmaanzeigelampe und aus einer Feldemissionsanzeige (FED) besteht.

10. Stereoskopische Anzeigevorrichtung nach Anspruch 8, **dadurch gekennzeichnet, dass** die Verschlussschicht (233) aus einer Gruppe ausgewählt ist, die aus einem Flüssigkristallverschluss (LC-Verschluss), aus einem Verschluss vom elektrophoretischen Typ, aus einem Verschluss vom mechanischen Typ, aus einem Verschluss vom Typ eines elektrooptischen Kristalls, aus einem Verschluss vom elektrochromen Typ besteht.

11. Stereoskopische Anzeigevorrichtung nach Anspruch 1, **dadurch gekennzeichnet, dass** die Anzeige (11) vom durchsichtigen Typ eine Flüssigkristallanzeige ist.

12. Stereoskopische Anzeigevorrichtung nach Anspruch 11, **dadurch gekennzeichnet, dass** die Flüssigkristallanzeige Pixelseparatoren (110) aufweist, die darin zwischen den benachbarten Pixeln vorgesehen sind.

13. Stereoskopische Anzeigevorrichtung nach Anspruch 11, **dadurch gekennzeichnet, dass** auf einer Rückseite der Flüssigkristallanzeige eine LCD-Maskenschicht (111) mit darauf konstruierten Pixelseparatoren vorgesehen ist.

14. Stereoskopische Anzeigevorrichtung nach Anspruch 1, **dadurch gekennzeichnet, dass** die linken und die rechten Hintergrundbeleuchtungsstreifen (131a, 131b) der Hintergrundbeleuchtungsquelle (13) aus einem Lichtleiter hergestellt sind, wobei die linken Hintergrundbeleuchtungsstreifen (131a) dazu verwendet werden, die von einer linken Beleuchtung (L14) ausgesendete Hintergrundbeleuchtung der linken Gruppe zu leiten, und die rechten Hintergrundbeleuchtungsstreifen (131b) dazu verwendet werden, die von einer rechten Beleuchtung (L15) ausgesendete Hintergrundbeleuchtung der rechen Gruppe zu leiten.

15. Stereoskopische Anzeigevorrichtung nach Anspruch 14, **dadurch gekennzeichnet, dass** die linken Hintergrundbeleuchtungsstreifen (131a) des Lichtleiters zu einem kammartig geformten einteiligen Element integriert sind, das ein Verbindungsteil aufweist, das an ersten Enden davon gebildet ist, dass die rechten Hintergrundbeleuchtungsstreifen (131b) des Lichtleiters zu einem kammartig geformten einteiligen Element integriert sind, das ein Verbindungsteil aufweist, das an zweiten Enden davon gebildet ist, wobei die linken und die rechten Beleuchtungen (L14, L15) jeweils benachbart zu den Verbindungsteilen der linken und der rechten Hintergrundbeleuchtungsstreifen (131a, 131b) vorgesehen sind.

16. Stereoskopische Anzeigevorrichtung nach einem der Ansprüche 14 und 15, **dadurch gekennzeichnet, dass** die linken und die rechten Beleuchtungen (L14, L15) aus einer Gruppe ausgewählt sind, die aus einer Kaltkatoden-Leuchtstofflampe (CCFL), aus einer Glühkatoden-Leuchtstofflampe (HCFL), aus einer LED und aus einem organischen/anorganischen Elektrolumineszenzmaterial (EL-Material) besteht.

17. Stereoskopische Anzeigevorrichtung nach einem der vorhergehenden Ansprüche, **dadurch gekennzeichnet, dass** die Steuereinheit (14) umfasst:
einen Taktsignalgenerator (21) zum Erzeugen von Taktsignalen,
einen Bildcontroller (22) zum Anzeigen des linken Bilds und des rechten Bilds auf der Anzeige (11) vom durchsichtigen Typ auf der Grundlage der von dem Taktsignalgenerator (21) empfangenen Taktsignale, und
einen Hintergrundbeleuchtungscontroller (23) zum Aktivieren der Hintergrundbeleuchtung der linken Gruppe und der Hintergrundbeleuchtung der rechten Gruppe auf der Grundlage der von dem Taktsignalgenerator (21) empfangenen Taktsignale.

18. Stereoskopische Anzeigevorrichtung nach Anspruch 17, **dadurch gekennzeichnet, dass** die Steuereinheit (14) einen Impulsbreitenmodulator (PWM) zum Einstellen einer Anschaltzeit der Hintergrundbeleuchtung der linken und der rechten Gruppe umfasst.

## Revendications

1. Dispositif d'affichage stéréoscopique comprenant
un affichage (11) de type transparent pour afficher de manière alternative des images de gauche et de droite,
un moyen optique (12) pour diriger le rétroéclairage des groupes gauche et droit vers une zone (32) de visualisation des images de gauche et une zone (31) de visualisation des images de droite,
une source (13) de rétroéclairage pour émettre de manière alternative un rétroéclairage des groupes gauche et droit se projetant sur une face arrière de l'affichage (11), et
une unité (14) de commande pour contrôler un affichage de l'affichage (11) et un rétroéclairage émis par la source (13) de rétroéclairage,
le moyen optique (12) étant une couche de lentilles lenticulaires disposée entre l'affichage (11) de type transparent et la source (13) de rétroéclairage, dans lequel ladite source (13) de rétroéclairage comprend de multiples bandes (131a) de rétroéclairage gauches et bandes (131b) de rétroéclairage droites agencées de manière alternative en parallèle, chacune des deux bandes (131a, 131b) de rétroéclairage droite et gauche adjacentes étant combinées comme une seule unité (131) de rétroéclairage, et ladite couche de lentilles lenticulaires est composée de multiples lentilles lenticulaires (121), chacune d'elles étant alignée avec une unité (131) de rétroéclairage correspondante de la source (13) de rétroéclairage, où la lumière émise par les bandes (131a) de rétroéclairage gauches est dirigée vers la zone (32) de visualisation des images de gauche, et la lumière émise par les bandes (131b) de rétroéclairage droites est dirigée vers la zone (31) de visualisation des images de droite ; et
l'unité (14) de commande activant la source (13) de rétroéclairage pour émettre le rétroéclairage du groupe gauche à partir des bandes (131a) de rétroéclairage gauches de la source (13) de rétroéclairage en synchronisation avec l'affichage de l'image de gauche, et émettre le rétroéclairage du groupe droit à partir des bandes (131b) de rétroéclairage droites de la source (13) de rétroéclairage en synchronisation avec l'affichage de l'image droite,
**caractérisé en ce que** la couche de lentilles lenticulaires du moyen optique (12) comprend de multiples séparateurs (122) de lentilles disposés respectivement entre les lentilles lenticulaires (121) adjacentes.

2. Dispositif d'affichage stéréoscopique selon la revendication 1, **caractérisé en ce que** la lentille lenticulaire (121) présente une largeur inférieure à un pas entre deux pixels adjacents de l'affichage (11) de type transparent, une couche (234) de masquage de rétroéclairage est disposée sur une face supérieure de la source (13) de rétroéclairage conjointement avec les multiples séparateurs (122) de lentilles.

3. Dispositif d'affichage stéréoscopique selon la revendication 1, **caractérisé en ce que** la lentille lenticulaire (121) présente une largeur inférieure à un pas entre deux pixels adjacents de l'affichage (11) de type transparent, une couche de masquage d'affichage est disposée sur une face arrière de l'affichage (11) conjointement avec les multiples séparateurs (122) de lentilles.

4. Dispositif d'affichage stéréoscopique selon la revendication 1, **caractérisé en ce que** les multiples bandes (131a, 131b) de rétroéclairage gauches et droites de la source (13) de rétroéclairage sont des réglettes d'éclairage.

5. Dispositif d'affichage stéréoscopique selon la revendication 4, **caractérisé en ce que** les réglettes d'éclairage des bandes (131a, 131b) de rétroéclairage gauches et droites de la source (13) de rétroéclairage sont choisies parmi un groupe comprenant un matériel électroluminescent (EL) organique ou inorganique, un ensemble DEL, un ensemble lampe fluorescente à cathode froide (CCFL), et un ensemble lampe fluorescente à cathode chaude (HCFL).

6. Dispositif d'affichage stéréoscopique selon la revendication 4, **caractérisé en ce que** la source (13) de rétroéclairage comprend des bandes noires (133) disposées respectivement entre les bandes (131a, 131b) de rétroéclairage gauches et droites adjacentes.

7. Dispositif d'affichage stéréoscopique selon la revendication 4, **caractérisé en ce qu'**une couche (234) de masquage comportant des bandes noires (235) disposées sur celle-ci alignées avec les côtés des bandes (131a, 131b) de rétroéclairage gauches et droites est disposée sur la source (13) de rétroéclairage.

8. Dispositif d'affichage stéréoscopique selon la revendication 1, **caractérisé en ce que** la source (13) de rétroéclairage comprend une couche (233) d'obturation disposée sur une surface supérieure d'une couche lumineuse non divisée (132), la couche (233) d'obturation comprend de multiples bandes (233a) d'obturation gauches et bandes (233b) d'obturation droites agencées de manière alternative en parallèle, où les bandes (233a, 233b) d'obturation gauches et droites s'ouvrent et se ferment de manière alternative pour permettre que le rétroéclairage soit émis à travers celles-ci.

9. Dispositif d'affichage stéréoscopique selon la revendication 8, **caractérisé en ce que** la couche lumineuse non divisée (132) de la source (13) de rétroéclairage est choisie parmi un groupe comprenant un ensemble lampe fluorescente à cathode froide (CCFL), un ensemble DEL, un matériel électroluminescent (EL) organique ou inorganique, un ensemble lampe fluorescente à cathode chaude (HCFL), une lampe pour affichage plasma et un affichage à émission par effet de champ (FED).

10. Dispositif d'affichage stéréoscopique selon la revendication 8, **caractérisé en ce que** la couche (233) d'obturation est choisie parmi un groupe comprenant un obturateur à cristaux liquides (LC), un obturateur de type électrophorétique, un obturateur de type mécanique, un obturateur de type cristaux électro-optiques, un obturateur de type électrochromique.

11. Dispositif d'affichage stéréoscopique selon la revendication 1, **caractérisé en ce que** l'affichage (11) de type transparent est un affichage à cristaux liquides.

12. Dispositif d'affichage stéréoscopique selon la revendication 11, **caractérisé en ce que** l'affichage à cristaux liquides comporte des séparateurs (110) de pixels disposés dans celui-ci entre les pixels adjacents.

13. Dispositif d'affichage stéréoscopique selon la revendication 11, **caractérisé en ce qu'**une couche (111) de masquage LCD comportant des séparateurs de pixels sur celle-ci est disposée sur une surface arrière de l'affichage à cristaux liquides.

14. Dispositif d'affichage stéréoscopique selon la revendication 1, **caractérisé en ce que** des bandes (131a, 131b) de rétroéclairage droites et gauches de la source (13) de rétroéclairage sont composées d'un conduit de lumière, les bandes (131a) de rétroéclairage gauches sont utilisées pour guider le rétroéclairage du groupe gauche émis par une lumière gauche (14), et les bandes (131b) de rétroéclairage droites sont utilisées pour guider le rétroéclairage du groupe droit émis par une lumière droite (15).

15. Dispositif d'affichage stéréoscopique selon la revendication 14, **caractérisé en ce que** les bandes (131a) de rétroéclairage gauches du conduit de lumière sont intégrées dans un élément monobloc en forme de peigne comportant une pièce de connexion placée aux premières extrémités de celui-ci, les bandes (131b) de rétroéclairage droites du conduit de lumière sont intégrées dans un élément monobloc en forme de peigne comportant une pièce de connexion placée aux secondes extrémités de celui-ci, les lumières gauches et droites (14, 15) sont respectivement disposées de manière adjacente aux pièces de connexion des bandes (131a, 131b) de rétroéclairage gauches et droites.

16. Dispositif d'affichage stéréoscopique selon une des revendications 14 et 15, **caractérisé en ce que** les lumières gauches et droites (14, 15) sont choisies parmi un groupe comprenant une lampe fluorescente à cathode froide (CCFL), une lampe fluorescente à cathode chaude (HCFL), une DEL, et un matériel électroluminescent (EL) organique ou inorganique.

17. Dispositif d'affichage stéréoscopique selon une des revendications précédentes, **caractérisé en ce que** l'unité (14) de commande comprend un générateur (21) de signaux de synchronisation pour produire des signaux de synchronisation,
un contrôleur (22) d'images pour afficher l'image gauche et l'image droite sur l'affichage (11) de type transparent en se basant sur les signaux de synchronisation reçus du générateur (21) de signaux de synchronisation, et
un contrôleur (23) de rétroéclairage pour activer le rétroéclairage du groupe gauche et le rétroéclairage du groupe droit en se basant sur les signaux de synchronisation reçus du générateur (21) de signaux de synchronisation.

18. Dispositif d'affichage stéréoscopique selon la revendication 17, **caractérisé en ce que** l'unité (14) de commande comprend un modulateur d'impulsions en durée (PWM) pour régler la tâche de moment d'activation du rétroéclairage du groupe gauche et droit.
